Europäisches Patentamt

European Patent Office

Office européen des brevets

(19)

(11) Veröffentlichungsnummer: **0 261 542**
**B1**

(12) **EUROPÄISCHE PATENTSCHRIFT**

(45) Veröffentlichungstag der Patentschrift: **16.01.91**

(21) Anmeldenummer: **87113406.0**

(22) Anmeldetag: **14.09.87**

(51) Int. Cl.5: **H 02 K 5/12,** H 02 K 5/14, F 16 J 15/02

(54) Gehäuseabdichtung, insbesondere Abdichtung zwischen Motorgehäuse und Lagerschild eines Elektro-Kleinmotors.

(30) Priorität: **25.09.86 DE 3632594**

(43) Veröffentlichungstag der Anmeldung:
**30.03.88 Patentblatt 88/13**

(45) Bekanntmachung des Hinweises auf die
Patenterteilung:
**16.01.91 Patentblatt 91/03**

(84) Benannte Vertragsstaaten:
**DE ES FR GB IT**

(56) Entgegenhaltungen:
**FR-A-2 085 568**
**FR-A-2 530 885**
**GB-A-1 025 884**
**GB-A-2 152 295**
**US-A-3 604 964**
**US-A-4 546 300**

(73) Patentinhaber: **Siemens Aktiengesellschaft
Wittelsbacherplatz 2
D-8000 München 2 (DE)**

(72) Erfinder: **Adam, Peter
Allerseeweg 25
D-8706 Höchberg (DE)**
Erfinder: **Seuffert, Werner
Mainstrasse 9
D-8722 Bergrheinfeld (DE)**

Courier Press, Leamington Spa, England.

## Beschreibung

Die Erfindung bezieht sich auf eine Gehäuseabdichtung, ins besondere Abdichtung zwischen dem Motorgehäuse und dem Lagerschild eines Elektro-Kleinmotors, gemäß Oberbegriff des Anspruchs 1; eine derartige Gehäuseabdichtung ist durch offenkundige Vorbenutzung allgemein bekannt.

Bei der bekannten Gehäuseabdichtung ist eine elastische Flachdichtung mit einem Außendurchmesser des axial gerade verlaufenden Außenrandes vorgesehen, der kleiner oder gleichgroß ist im Verhältnis zum Innendurchmesser der Innenwandung des Gehäuses, an der die Flachdichtung radial dichtend anliegen soll. Dieses Durchmessermaß ist notwendig, um die Flachdichtung bei der Montage einfach und ohne Gefahr einer unzulässigen Verformung ihres Außenrandes in das abzudichtende Gehäuse einstecken zu können. Zum Ausgleich von Toleranzen der als Massenartikel gestanzten Flachdichtung wird diese durch den axial stirnseitig gegengelegten und am Gehäuse anschließend verstemmten Lagerdeckel um ein geringes Maß gepreßt und dadurch radial aufgeweitet. Je nach Toleranzlage des Außendurchmessers des Gummis ergibt sich dabei ein unterschiedlicher radialer Preßdruck gegen die Innenwandung des Gehäuses, wobei bei zu geringer Pressung sogar die Gefahr einer teilweisen undichten Anlage besteht.

Gemäß Aufgabe vorliegender Erfindung soll eine Gehäuseabdichtung zwischen dem Motorgehäuse und einem dieses stirnseitig verschließenden Lagerschild, geschaffen werden, die einerseits leicht fertigund montierbar ist und andererseits auch unter Berücksichtigung der bei einem Massenartikel gegebenen Fertigtoleranzen die vollständige Dichtigkeit gegenüber feuchten und aggressiven Medien gewährleistet.

Die Lösung dieser Aufgabe gelingt bei einer Gehäuseabdichtung der eingangs genannten Art durch die Lehre des Anspruchs 1; vorteilhafte Ausgestaltungen der Erfindung sind jeweils Gegenstand der Unteransprüche 2 bis 4.

Durch die erfindungsgemäß ausgestaltete Gehäuseabdichtung kann auch unter Berücksichtigung maximaler Toleranzunterschiede im Außendurchmesser der elastischen Flachdichtung beim axialen Andrücken der Flachdichtung in jedem Fall eine abdichtende Anlage über den gesamten Außenrand aufgrund des vorgesehenen Durchmesser-Übermaßes an seiner äußeren Stirnseite und eine einfache Einführung der Flachdichtung ohne Gefahr einer unerwünschten Außenrandverformung aufgrund des Durchmesser-Untermaßes gewährleistet werden, wobei die Gefahr einer ungezielten Verpressung des Dichtungsmaterials im Bereich des DurchmesserÜbermaßes des Außenrandes durch die Entlastungsnut verhindert ist und die trichterförmigen axial vorstehenden Wandungslippen der Durchstekköffnungen beim stirnseitigen Festpressen der Flachdichtung durch den radialen Druck des Außenrandes im Bereich des Durchmesser-Übermaßes zusätzlich dichtend an die eingesteckten Anschlußstecker angedrückt werden.

In der DE-OS 23 12 024 ist zwar eine Gehäuseabdichtung zwischen dem Motorgehäuse und dem Lagerschild eines Elektromotors mit einer mit ihrem Außenrand radial dichtend an der Innenwandung des Motorgehäuses anliegenden elastischen Dichtung bekannt, jedoch wird diese Dichtung nicht bei der Montage von Motorgehäuse und Lagerschild zwischen diesen gequetscht, da der Lagerschild bei seiner Montage am Motorgehäuse mit axialen Anschlägen gegen ein motorgehäusefestes Formteil zur Anlage kommt; die weiteren, kennzeichnenden Merkmale vorliegender Erfindung sind im bekannten Fall ebenfalls nicht offenbart.

Die US- 25 09 436 zeigt eine Dichtung mit einem Außenrand, der von einem kleineren zu einem größeren Durchmessermaß ansteigt, doch handelt es sich dabei nicht um eine zwischen Motorgehäuse und axial montiertem Lagerschild eingedrückte Gehäusedichtung, sondern um eine auf einer rotierenden Welle aufgebrachte Lecksicherung, die mit ihrem ansonsten freien Außenrand an einem die rotierende Welle aufnehmenden Gehäuse schleift; auch in diesem bekannten Fall fehlen Hinweise auf die weiteren Merkmale vorliegender Erfindung.

Eine zusätzliche Montagevereinfachung ergibt sich bei der erfindungsgemäßen Gehäuseabdichtung dadurch, daß die Anschlußstecker an den im Motorgehäuse anzuordnenden Bürstenhalter axial vorstehend befestigt sind und die Flachdichtung durch Aufstecken auf die Anschlußstecker vorfixiert gehalten und somit in einem, insbesondere für eine Automatenfertigung vorteilhaften, Handhabungsvorgang schon mit der Bürstenplatte bei deren Montage auf einfache Weise axial in das Motorgehäuse von dessen Stirnseite her eingeführt werden können.

Als axialer Innenanschlag wird bei einem Kommutatormotor vorteilhafterweise mittel- bzw. unmittelbar der hinter dem Lagerschild angeordnete Bürstenhalter verwendet; die axiale Festlegung und Verpressung der Flachdichtung erfolgt dann zweckmäßigerweise durch das von stirnseitig außen angelegten und auf besonders einfache Weise in seiner Endlage durch Verstemmen von angeformten radialen Nasen am Gehäuse fixierten Lagerschild.

Die Erfindung wird im folgenden anhand eines schematisch dargestellten Ausführungsbeispiels in der Zeichnung näher erläutert; darin zeigen:

FIG 1 in einem axialen Teilschnittbild einen Kommutatormotor mit an seiner rechten Stirnseite erfindungsgemäß abgedichtetem Gehäuse;

FIG 2 eine Draufsicht auf die axial außenliegende Stirnseite einer erfindungsgemäßen Flachdichtung;

FIG 3 einen Schnitt durch die Flachdichtung in FIG 2 gemäß Schnittverlauf III-III;

FIG 4 in weiter schematisierter Darstellung in einem axialen Teillängsschnittbild ein Motorgehäuse mit stirnseitig gegengelegter erfindungsgemäßer Flachdichtung vor deren axialer Festpressung durch den von stirnseitig außen angelegten Lagerschild.

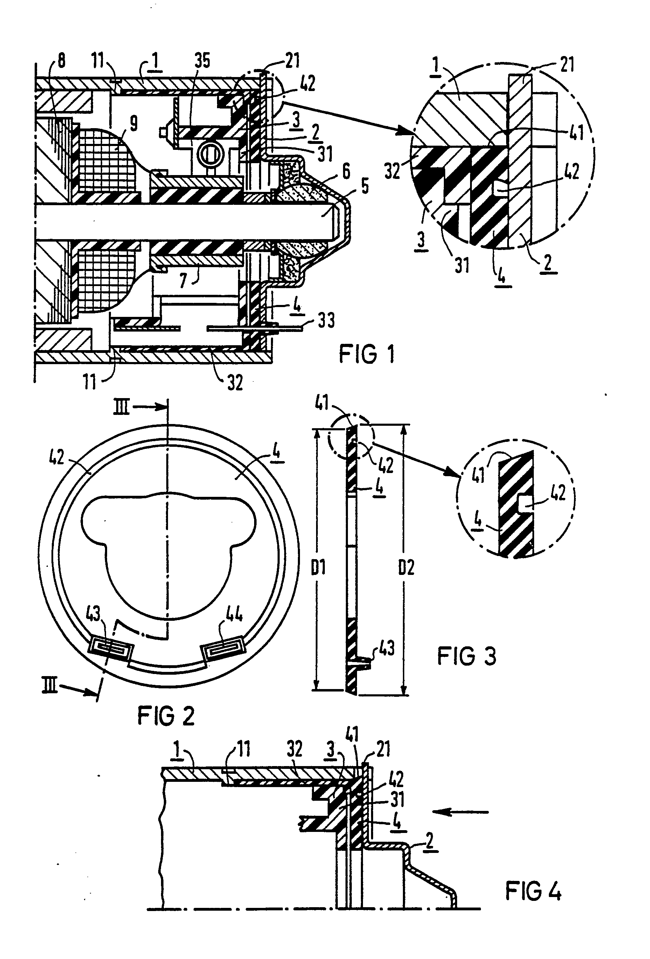

FIG 1 zeigt das rechte Ende eines dauermagneterregten Kommutatormotors mit einem Gehäuse 1, an dessen rechter Stirnseite ein Lagerschild 2 mittels angestanzter radialer Verstemmnasen 21 verstemmt ist, in dem über Lager 6 die das Rotorblechpaket 8 mit der Rotorwicklung 9 sowie den Kommutator 7 aufnehmende Rotorwelle 5 drehbar gelagert ist. Als Stromzuführung zu der Rotorwicklung 9 dienen aus der Stirnseite herausragende Anschlußstecker 33, 34, die in hier nicht näher dargestellter Weise mit Hammerbürstenhaltern 35, 36 im Innern des Gehäuses 1 kontaktiert sind, die auf dem Kommutator 7 aufliegen.

Zur Abdichtung zwischen dem an der rechten Stirnseite des Gehäuses 1 angedrückten und verstemmten Lagerschild 2 einerseits und dem Motorgehäuse 1 andererseits dient eine in FIG 2, 3 näher dargestellte gestanzte Flachdichtung 4. Die gestanzte Flachdichtung 4 ist axial zur Gehäuseinnenseite durch Anlage an einer Bürstenplatte 31 des Bürstenhalters 3 fixiert, die ihrerseits an einem radial in das Gehäuseinnere eingedrückten Anschlagnocken 11 des Gehäuses 1 nach axial innen anliegt und nach axial außen durch den gemäß Pfeilrichtung in FIG 4 gegengedrückten und am Gehäuse 1 verstemmten Lagerschild 2 fixiert ist. Zur radial dichten Anlage der gestanzten Flachdichtung 4 an der Innenwandung des Gehäuses 1 ist die Flachdichtung erfindungsgemäß mit einem von ihrer Innenstirnseite zu ihrer Außenstirnseite ansteigenden Außenrand 41 versehen, wobei dessen erstes Durchmessermaß D1 an der Innenstirnseite kliener oder gleichgroß ist im Vergleich zum Durchmessermaß der Innenwandung im abzudichtenden Gehäuseteil und dessen zweites Durchmessermaß D2 an der Außenstirnseite gleichgroß oder größer ist im Verhältnis zum Durchmessermaß der Innenwandung im abzudichtenden Gehäuseteil.

Wie insbes. aus FIG 4, die das Zuführen der Flachdichtung 4 zu Beginn des Einsteckvorganges in das Gehäuse 1 zeigt, ersichtlich, kann durch den erfindungsgemäß ausgeführten Außenrand 41 der Flachdichtung 4 diese auf einfache Weise ohne Gefahr einer unzulässigen Verformung in das Gehäuse 1 eingesteckt werden. Damit sich beim weiteren axialen Eindrücken der Flachdichtung 4 mittels des axial aufgedrückten Lagerschildes 2 keine zu starke und insbesondere undefinierte Pressung des Außenrandes 41 eintreten kann, ist die gestanzte Flachdichtung 4 mit einer umlaufenden, axial eingeformten Entlastungsnut 42 versehen, in die - wie aus der betriebsmäßigen Stellung der Dichtung 4 in FIG 1 im oberen Teil ersichtlich bei zu starker Quetschung das Material durch Verformung des Dichtungsmaterials im Bereich der Entlastungsnut 41 ausweichen kann.

Nach einer Ausgestaltung der Erfindung sind an die Flachdichtung 4 gleichzeitig einstückig axial trichterförmige Durchstecköffnungen 43, 44 mit axial vorstehenden Wandungslippen derart angeformt, daß sich beim Durchstecken der Anschlußstecker 33, 34 von der gehäuseinneren Stirnseite her sich die Wandungslippen an die Anschlußstecker 43, 44 selbstdichtend anlegen. Dadurch, daß - wie insbes. aus FIG 2 ersichtlich die Durchstecköffnungen 43, 44 im Bereich der umlaufenden Entlastungsnut 42 und im wesentlichen in deren Richtung verlaufend angeordnet sind, wird durch die radiale Pressung der an ihrem außenstirnseitigen Außenrand mit einem Durchmesser-Übermaß D2 versehenden Flachdichtung das dichte Anlegen der Dichtlippen der Durchstecköffnungen 43, 44 noch weiter verstärkt.

In für eine Automatenfertigung vorteilhafter Weise kann die Zahl der Handhabungsschritte dadurch weiter verringert werden, daß mittels der an die Flachdichtung 4 angeformten Durchsteckköffnungen 43, 44 die Flachdichtung 4 auf die in der Bürstenplatte 31 fixierten Anschlußstecker 43, 44 als Vormontageteil aufgesteckt und dann gleichzeitig mit dem axialen Einstecken des Bürstenhalters 3 montiert wird.

## Patentansprüche

1. Gehäusebdichtung, insbesonde Abdichtung zwischen dem Motorgehäuse (1) und dem Lagerschild (2) eines Elektro-Kleinmotors mit einer mit ihrem Außenrand (41) radial dichtend an der Innenwandung des Motorgehäuses (1) anliegenden, stirnseitig gegen einen axialen Anschlag angedrückten elastischen Flachdichtung (4) dadurch gekennzeichnet, daß der Außenrand (41) der Flachdichtung (4) von seiner Innenstirnseite zu seiner Außenstirnseite von einem ersten Durchmessermaß (D1) kleiner oder gleichgroß im Verhältnis zum Durchmessermaß der Innenwandung des Motorgehäuses (1) zu einem zweiten Durchmessermaß (D2) gleichgroß oder größer im Verhältnis zum Durchmessermaß der Innenwandung des Motorgehäuses (1) ansteigt und die Flachdichtung (4) in Nähe des Außenrandes (41) mit einer umlaufenden, axial eingeformten Entlastungsnut (42) versehen ist, in deren Bereich im wesentlichen in Richtung der Entlastungsnut (42) verlaufende axial trichterförmige selbstdichtende Durchsteckköffnungen (43, 44) für vom Innern des Motorgehäuses (1) nach stirnseitig außen verlaufende Anschlußstecker (33, 34) angeformt sind.

2. Gehäuseabdichtung, insbesondere Abdichtung für einen Kommutatormotor mit Bürstenhalter nach Anspruch 1, dadurch gekennzeichnet, daß die Anschlußstecker (33, 34) an dem im Motorgehäuse (1) fixierten Bürstenhalter (3) befestigt und die Flachdichtung (4) durch Aufstecken auf die Anschlußstecker (33, 34) derart vorfixiert gehalten sind.

3. Gehäuseabdichtung nach Anspruch 1 und/ oder 2, dadurch gekennzeichnet, daß die Flachdichtung (4) axial innen gegen den Bürstenhalter (3) mittel- bzw. unmittelbar anliegt.

4. Gehäuseabdichtung nach einem der Ansprüche 1-3, dadurch gekennzeichnet, daß die Flachdichtung (4) von stirnseitig axial außen durch einen am Motorgehäuse (1) fixierten, insbesondere verstemmten Lagerschild (2) in ihre Betriebslage gedrückt ist.

## Revendications

1. Dispositif d'étanchéité pour une carcasse, notamment dispositif d'étanchéité installé entre la carcasse (1) et le flasque de support (2) d'un petit moteur électrique, comportant une garniture d'étanchéité élastique plate (4), qui s'applique par son bord extérieur (41), de manière à établir une étanchéité radiale, contre la paroi intérieure de la carcasse (1) du moteur et qui est repoussée frontalement contre une butée axiale, caractérisé par le fait que le diamètre extérieur du bord extérieur (41) de la garniture d'étanchéité plate (4) augmente depuis une première valeur (D1) inférieure ou égale à la valeur du diamètre de la paroi intérieure de la carcasse (1) du moteur, jusqu'à une seconde valeur (D2) égale ou supérieure à la valeur du diamètre de la paroi intérieur de la carcasse (1) du moteur, et la garniture d'étanchéité plate (4) comporte, à proximité du bord extérieur (41), une rainure périphérique de détente (42), ménagée dans la direction axiale et au voisinage de laquelle sont formées par moulage des ouvertures d'enfichage (43, 44) qui établissent une étanchéité automatique, qui sont réalisées en forme de trémies axiales, qui s'étendent essentiellement dans la direction de la rainure de détente (42), et qui sont prévues pour des connecteurs (33, 34) s'étendant frontalement vers l'extérieur à partir de l'intérieur de la carcasse (3) du moteur.

2. Dispositif d'étanchéité pour un carcasse, notamment dispositif d'étanchéité pour un moteur à collecteur comportant un porte-balais suivant la revendication 1, caractérisé par le fait que les collecteurs (33, 34) sont fixés sur le porte-balais (3) fixé à la carcasse (1) du moteur, et la garniture d'étanchéité plate (4) est maintenue dans un état préalablement fixé par enfichage sur les connecteurs (33, 34).

3. Dispositif d'étanchéité pour une carcasse selon la revendication 1 et/ou 2, caractérisé par le fait que la garniture d'étanchéité plate (4) s'applique indirectement ou directement, et ce intérieurement du point de vue axial, contre le porte-balais (3).

4. Dispositif d'étanchéité pour une carcasse selon l'une des revendications 1-3, caractérisé par le fait que la garniture d'étanchéité plate (4) est repoussée frontalement et extérieurement du point de vue axial, dans sa position de service, par un flasque de support fixé, notamment par blocage par serrage, sur la carcasse (1) du moteur.

## Claims

1. A housing sealing, in particular a sealing between the motor housing (1) and the bearing bracket (2) of an electric low-power motor, with a flexible flat packing (4), lying with its outer edge (41) radially sealing to the inner wall of the motor housing (1), and pressed with its face against an axial stop, characterised in that the outer edge (41) of the flat packing (4) increases from its inner face to its outer face from a first diameter measure (D1), smaller or equally large in relation to the diameter measure of the inner wall of the motor housing (1) to a second diameter measure (D2) equally large or larger in relation to the diameter measure of the inner wall of the motor housing (1) and the flat packing (4) in the vicinity of the outer edge (41) is provided with a circumferential, axially moulded relief groove (42), in which region substantially in the direction of the relief groove (42) axially extending funnel-shaped self-sealing push-through openings (43, 44) are integrally moulded for connectors (33, 34) extending outwards from the inside of the motor housing (1) to the face.

2. A housing sealing, in particular a sealing for a commutator motor with a brush holder according to claim 1, characterised in that the connectors (33, 34) are secured to the brush holder (3) fixed in the motor housing (1) and the flat packing (4) is held by plugging onto the connectors (33, 34) prefixed in this way.

3. A housing sealing according to claim 1 and/or 2, characterised in that the flat packing (4) lies axially inside directly or indirectly against the brush holder (3).

4. A housing sealing according to one of claims 1—3, characterised in that the flat packing (4) is pressed from the axially outward face by a bracket (2) fixed on the motor housing (1), preferably caulked, into its operational position.

FIG 1

FIG 2

FIG 3

FIG 4